# EUROPEAN PATENT SPECIFICATION

(11) **EP 3 497 374 B1**
(45) Date of publication and mention of the grant of the patent: **31.03.2021**
(21) Application number: 16791069.4
(22) Date of filing: 12.08.2016
(51) Int. Cl.: F24F 1/38, F16F 15/067, F16B 5/02, F24F 1/40, F16F 1/12, F24F 13/32

(54) **FASTENING SYSTEM AND AIR HANDLING UNIT COMPRISING SUCH A FASTENING SYSTEM**
BEFESTIGUNGSSYSTEM UND LUFTBEHANDLUNGSEINHEIT MIT SOLCH EINEM BEFESTIGUNGSSYSTEM
SYSTÈME DE FIXATION ET UNITÉ DE TRAITEMENT D'AIR COMPRENANT LEDIT SYSTÈME DE FIXATION

(43) Date of publication of application: 19.06.2019
(73) Proprietor: Carrier Corporation, Palm Beach Gardens, FL 33418 (US)
(72) Inventor: CARTON, Thomas, 01200 Eloise (FR); DARDEL, Yoann, 73170 Billieme (FR)
(74) Representative: Lavoix
(86) International application number: PCT/IB2016/001338
(87) International publication number: WO 2018/029504

(56) References cited:
- EP-A2- 1 897 660
- DE-A1-102005 023 100
- JP-A- S6 478 913
- US-A- 4 598 503
- US-A- 5 396 782

## Description

The invention concerns a fastening system for fastening an air blower. The invention also concerns an air handling unit comprising such a fastening system.

Air handling units used to perform ventilation and air handling operations in buildings often include air blowers which are mounted within the air handling units. The air handling units comprise bottom panels, and the air blowers are fastened to the bottom panels using decoupling studs which allow for damping of vibrations of the air blowers during operation.

In known systems two conical bases are used, one being fixed on the air blower and the other being fixed to the panel, and which are plugged into a spring. Such a solution, however, does not guarantee a satisfying resistance to traction. When the air blower starts, a traction force is exerted on the decoupling stud and the conical basis can slip out of the spring. An additional rubber shock absorber is often integrated in addition to the decoupling stud to prevent such slipping. This, however, decreases the quality of the decoupling and increases the cost of the assembly. Another disadvantage comes from the fact that the top conical base, which is fixed to an underside face of the air blower, is screwed under the blower during the assembling process. Manual operations performed under a load are dangerous and such an assembling process is thus forbidden for safety reasons.

US-B-4 598 503 discloses a fastening system for fastening an air blower to a panel, comprising a bottom rail fixed to a panel and a top rail which supports a blower. Vibrations of the blower are damped by a helical spring mounted between two cup-shaped parts, one being mounted on a bolt integral in movement with the top rail.

The aim of the invention is to provide a new fastening system for fastening an air blower, which provides a better resistance to slipping without reducing the decoupling ability of the fastening system.

To this end, the invention concerns a fastening system for fastening an air blower, comprising a first part to be fastened to a panel and a second part to be fastened to a frame of an air blower, and an elastic decoupling element, formed by a helical spring, linking the first and second parts, the first and second parts being cup-shaped and having peripheral edges extending towards each other, the elastic decoupling element comprising two terminal spires which are respectively inserted in the first and second cup-shaped parts, wherein:
- the fastening system comprises plates inserted between the terminal spires and the central spires of the helical spring and fastened to the first and second cup-shaped parts,
- the plates have a circular shape adapted to insert in the first and second cup-shaped parts, and radially protruding tongues adapted to insert in corresponding notches of the peripheral edges of the first and second cup-shaped parts.

Thanks to the invention, the spring is retained within the parts fastened to the frame of the blower or to the panel, and therefore cannot slip out of the spring. The fastening system has therefore a better traction resistance.

According to further aspects of the invention which are advantageous but not compulsory, such a fastening system may incorporate one or several of the following features:
- The first and second cup-shaped parts comprise bulging shapes for centering the terminal spires around a central axis of the fastening system;
- The plates are fastened to the cup-shaped parts by riveted screws which respectively fasten the first and second cup-shaped parts to the panel and to the air blower;
- Each screw has an elongated body that is inserted through concentric holes respectively provided in a plate, a cup-shaped part and the panel or the frame of the air blower;
- Each screw comprises a head, a deformable portion that surrounds the elongated body and a radial collar, the cup-shaped portion and the plate being secured together between the collar and the deformable portion by riveting;
- The elongated body comprising a threaded portion which protrudes from the opposite side of the cup-shaped part with respect to the helical spring;
- The frame of the air blower is adapted to be fastened to the second cup-shaped part by screwing a nut on an upwardly protruding threaded portion.

The invention also relates to an air handling unit comprising an enclosure formed by panels and comprising at least one air blower, characterized in that the air blower is fastened to a panel of the enclosure by fastening systems as mentioned here-above.

The invention will now be explained in reference to the annexed drawings, as an illustrative example. In the annexed drawings:
- figure 1 is a side view of an air blower mounted on a panel of an air handling unit;
- figure 2 is an enlarged view of detail II on figure 1;
- figure 3 is an exploded perspective view of a fastening system according to the invention;

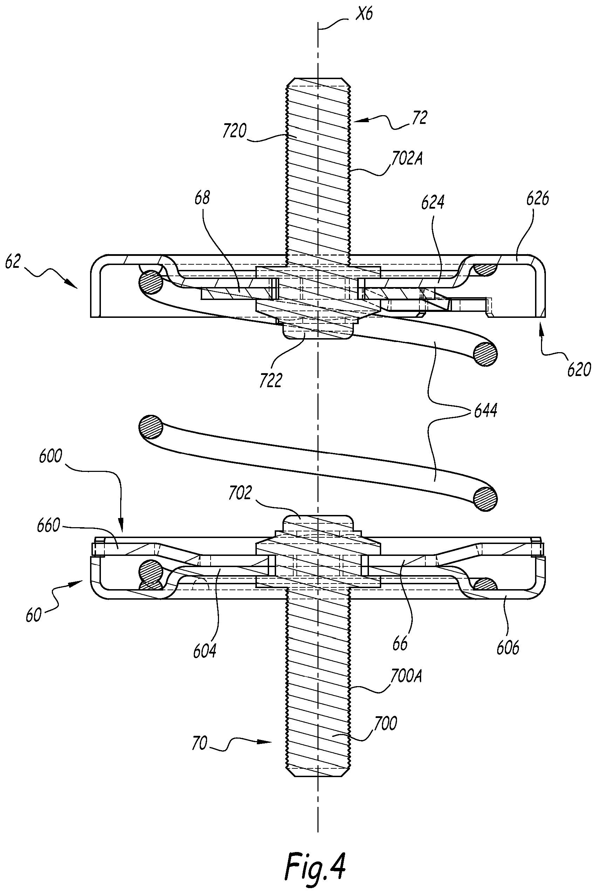

- figure 4 is an axial cut view of the fastening system of figure 3 in mounted configuration;
- figure 5 is a perspective view of a first step of a fastening process of the air blower of figure 1 on the panel of figure 1;
- figure 6 is a perspective view of a second step of the process of figure 5, involving mounting of fastening systems;
- figure 7 is a perspective view of a third step of the process of figures 5 and 6, involving mounting an air blower on the fastening systems;
- figure 8 is a perspective view of a fourth step of the mounting process involving securing the air blower to the fastening systems.

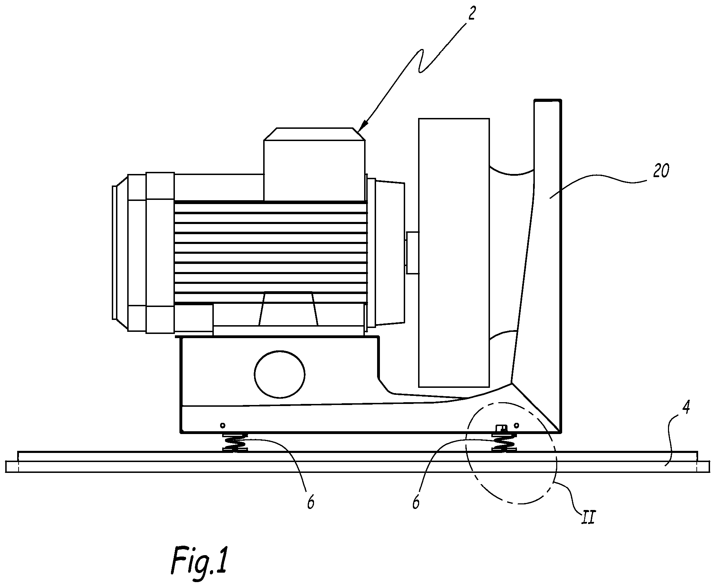

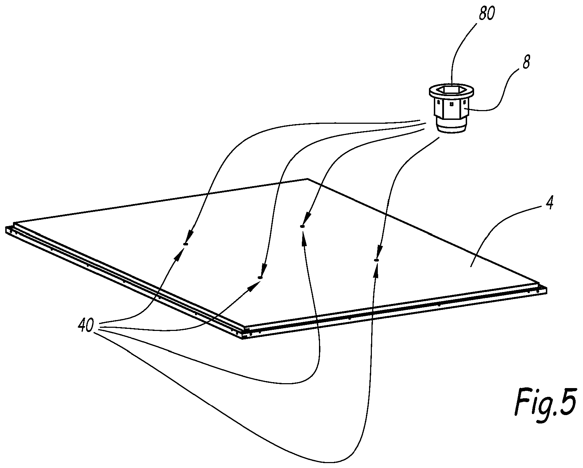

Figure 1 represents an air blower 2 integrated in an air handling unit represented partially by an enclosure formed by a bottom panel 4. The air blower 2 is fastened to the panel 4 by fastening systems 6, two of them being visible on figure 1. Preferably, four fastening systems 6 are used, as represented on figures 5 to 8.

Each fastening system 6 comprises a first part 60 which is fastened to the panel 4, a second part 62 which is fastened to a frame 20 of the air blower 2, and an elastic decoupling element 64 which links the first and second parts 60 and 62. The elastic decoupling element 64 allows decoupling between the panel 4 and the frame 20 so that vibrations occurring during operation of the blower 2 are damped and absorbed in order to prevent transmission of vibrations to the panel 4 and to the air handling unit.

The first and second parts 60 and 62 are cup-shaped and have peripheral edges 600 and 620 which extend towards each other. The peripheral edges 600 and 620 are centered on a central axis X6 of the fastening system 6. The decoupling element 64 is formed by a helical spring centered on the central axis X6. The helical spring 64 comprises two terminal spires 640 and 642 which are respectively inserted in the first and second cup-shaped parts 60 and 62. The edges 600 and 620 prevent the terminal spires 640 and 642 from moving radially with respect to the central axis X6. The cup-shaped parts 60 and 62 also comprise central bulging shapes 604 and 624, which are centered on the central axis X6, and which protrude from respective bottom portions 606 and 626 of the cup-shaped parts 60 and 62. The bottom portions 606 and 626 are respectively in contact with the panel 4 and the frame 20. The terminal spires 640 and 642 are mounted against the bottom portions 606 and 626 around the bulging shapes 604 and 624, which thus guarantee the centering of the terminal spires 640 and 642 around the central axis X6.

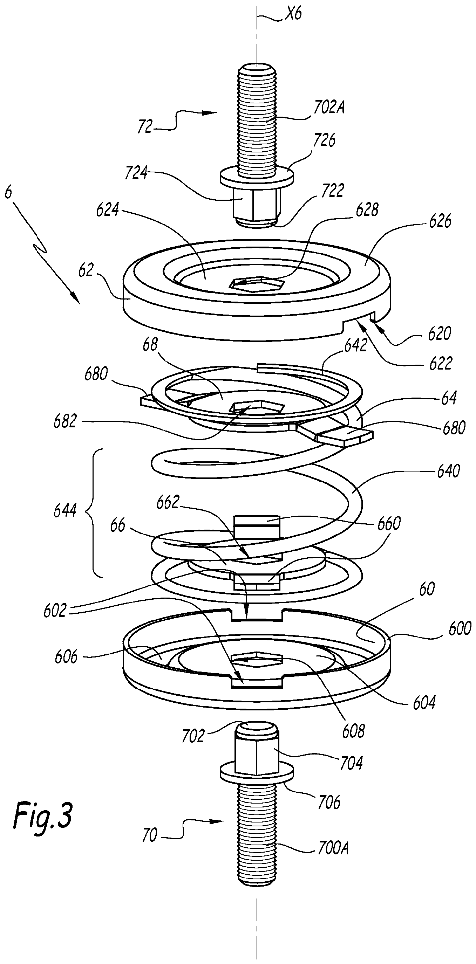

The fastening system 6 further includes two plates 66 and 68 which are inserted between the terminal spires 640 and 642 and between the central spires 644 of the spring 64, and fastened to the first and second cup-shaped parts 60 and 62. More precisely, as shown in figure 3, plate 66 is inserted between the terminal spire 640 and the central spires 644, while plate 68 is inserted between the terminal spire 642 and the central spires 644. The plates 66 and 68 allow retaining the terminal spires 640 and 642 within the cup-shaped parts 60 and 62.

Each one of plates 66 and 68 has a circular shape adapted to be inserted in the first and second cup-shaped parts 60 and 62. The plates 66 and 68 each have protruding tongues 660 and 680 which protrude outwardly from the circular shape between the central spires 644 and the terminal spires 640 and 642, and which are inserted in corresponding notches 602 and 622 of the first and second parts 60 and 62.

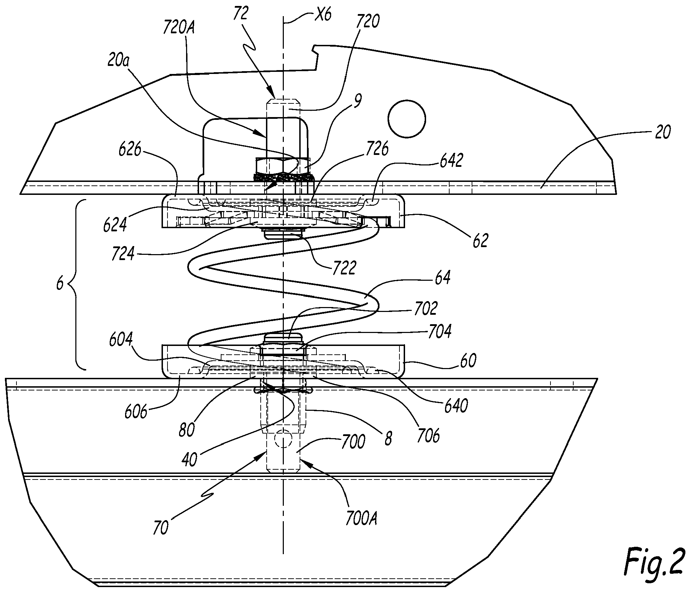

As depicted in Fig. 2, the plates 66 and 68 are fastened to the first and second parts 60 and 62 by riveted screws 70 and 72 which at the same time fasten the first and second parts 60 and 62 respectively to the panel 4 and to the frame 20. Each screw 70 and 72 has a respective elongated body 700 and 720. The elongated body 700 is inserted through concentric holes 40, 608 and 662 respectively provided in the panel 4, the cup-shaped part 60 and the plate 66. The elongated body 720 is inserted through concentric holes 20a, 628 and 682 respectively provided in the frame 20, the cup-shaped part 62 and the plate 68.

Each of screws 70 and 72 comprises a respective head 702 and 722, a deformable portion 704 and 724 and a collar 706 and 726 that surrounds the elongated body 700 or 720 and extends radially in relation to the central axis X6. The cup shaped parts 60 and 62 and the plates 66 and 68 are secured together between the collars 706 and 726 and the collapsed deformable portions 704 and 724 of the screws by way of riveting, thus securing the terminal spires 640 and 642 to the first and second parts 60 and 62. The screws 70 and 72 with the deformable portions 704 and 724 may be standard parts. The fastening by riveting can be easily performed using a standard riveting tool adapted to operate the collapsing of the deformable portions 704 and 724 by axial translation of the heads 702 and 722 towards the collars 706 and 726. The elongated body 700 or 720 of the screws may comprise threaded portions 700A and 720A which protrude from the opposite side of the first and second parts 60 and 62 with respect to the spring 64. The threaded portions 700A and 720A are passed through the holes 40 and 20a in the panel 4 and the frame 20 and bolted by nuts, one being shown in figure 2 with reference number 9.

As depicted in figure 5, prior to mounting the fastening system 6, inserts 8 are first introduced in the holes 40 of the panel 4. These inserts 8 have a collar 80 which extends radially between the panel 4 and the collar 706 of the screw 70.

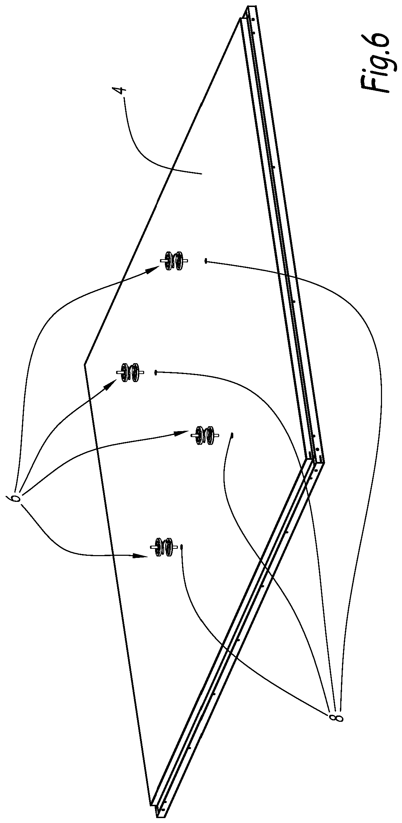

As shown in figure 6, four fastening systems 6, previously assembled by riveting the first and second parts 60 and 62 to the helical spring 64 and the plates 66 and 68, are inserted in the inserts 8 along a vertical direction corresponding to the central axis X6. The elongated bodies 700 of the screws 70 are inserted in the inserts 8. In this configuration, the elongated bodies 720 of the screws 72 protrude upwards.

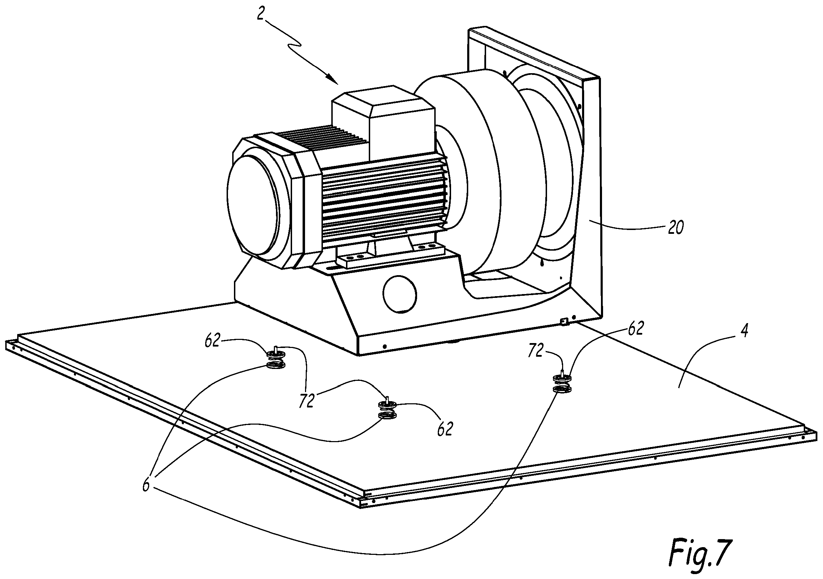

In a third step shown in figure 7, the blower 2 is mounted against the second parts 62 of the fastening systems 6, by inserting the elongated bodies 720 of the screws 72 in the matching holes 20a of the frame 20.

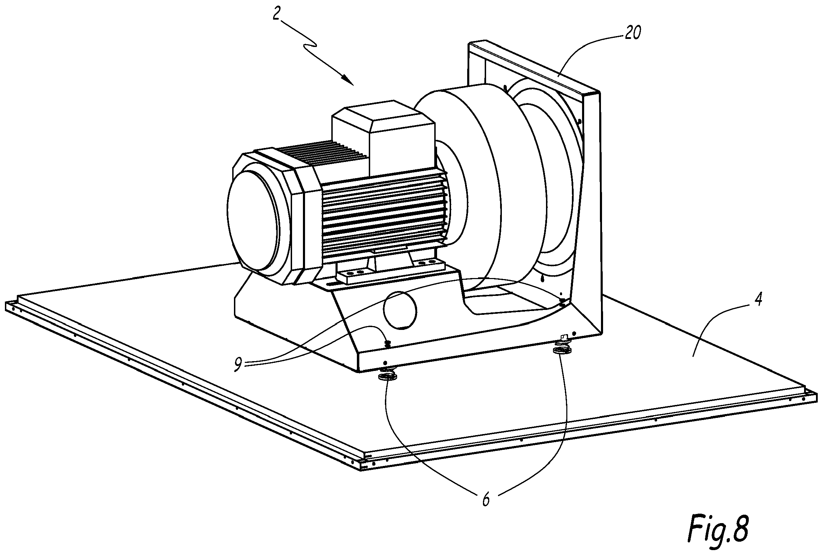

In a fourth and final operation as shown in figure 8, the nuts 9 are screwed on the threaded portions 720A to secure the frame 20 to the second parts 62, thus fastening the blower 2 to the panel 4. As the threaded portion 720A protrudes upwardly, the screwing of the nuts 9 is operated on an upwards side of the frame 20, allowing assembly operations in accordance with safety constraints.

According to a non-shown embodiment, the fastening systems of the invention may be used to secure air blowers within other types of installations than air handling units.

## Claims

1. Fastening system (6) for fastening an air blower (2), comprising a first part (60) to be fastened to a panel (4) and a second part (62) to be fastened to a frame (20) of an air blower (2), and an elastic decoupling element (64), formed by a helical spring, linking the first and second parts (60, 62),
- the first and second parts (60, 62) being cup-shaped and having peripheral edges (600, 620) extending towards each other;
- the elastic decoupling element (64) comprising two terminal spires (640, 642) which are respectively inserted in the first and second cup-shaped parts (60, 62), **characterized in that**:
- the fastening system (6) comprises plates (66, 68) inserted between the terminal spires (640, 642) and the central spires (644) of the helical spring (64) and fastened to the first and second cup-shaped parts (60, 62);
- the plates (66, 68) have a circular shape adapted to insert in the first and second cup-shaped parts (60, 62), and radially protruding tongues (660, 680) adapted to insert in corresponding notches (602, 622) of the peripheral edges (600, 620) of the first and second cup-shaped parts (60, 62).

2. Fastening system according to claim 1, wherein the first and second cup-shaped parts (60, 62) comprise bulging shapes (604, 624) for centering the terminal spires (640, 642) around a central axis (X6) of the fastening system (6).

3. Fastening system according to any preceding claim, wherein the plates (66, 68) are fastened to the cup-shaped parts (60, 62) by riveted screws (70, 72) which respectively fasten the first and second cup-shaped parts (60, 62) to the panel (4) and to the air blower (2).

4. Fastening system according to claim 3, wherein each screw (70, 72) has an elongated body (700, 702) that is inserted through concentric holes (662, 682, 608, 628, 40, 20a) respectively provided in a plate (66, 68), a cup-shaped part (60, 62) and the panel (4) or the frame (20) of the air blower (2).

5. Fastening system according to claim 4, wherein each screw (70, 72) comprises a head (702, 722), a deformable portion (704, 724) that surrounds the elongated body (700, 720) and a radial collar (706, 724), the cup-shaped portion (60, 62) and the plate (66, 68) being secured together between the collar (706, 726) and the deformable portion (704, 724) by riveting.

6. Fastening system according to any of claims 4 and 5, wherein the elongated body (700, 720) comprising a threaded portion (700A, 720A) which protrudes from the opposite side of the cup-shaped part (60, 62) with respect to the helical spring (64).

7. Fastening system according to claim 6, wherein the frame (20) of the air blower (2) is adapted to be fastened to the second cup-shaped part (62) by screwing a nut (9) on an upwardly protruding threaded portion (720A).

8. Air handling unit comprising an enclosure formed by panels (4) and at least one air blower (2), wherein the air blower (2) is fastened to a panel (4) of the enclosure by fastening systems (6) according to one of the previous claims.

## Patentansprüche

1. Befestigungssystem (6) zum Befestigen eines Luftgebläses (2), umfassend ein erstes Teil (60), das an einer Platte (4) zu befestigen ist, und ein zweites Teil (62), das an einem Rahmen (20) eines Luftgebläses (2) zu befestigen ist, und ein elastisches Entkopplungselement (64) das durch eine Schraubenfeder gebildet ist und das erste und das zweite Teil (60, 62) verbindet:
- wobei das erste und das zweite Teil (60, 62) schalenförmig sind und Umfangsränder (600, 620) aufweisen, die sich zueinander hin erstrecken;
- das elastische Entkopplungselement (64) umfassend zwei Endwindungen (640, 642), die jeweils in das erste und das zweite schalenförmige Teil (60, 62) eingesetzt sind, wobei
- das Befestigungssystem (6) Platten (66, 68) umfasst, die zwischen die Endwindungen (640, 642) und die mittleren Windungen (644) der Schraubenfeder (64) eingefügt und an den ersten und zweiten schalenförmigen Teilen (60, 62) befestigt sind;
- wobei die Platten (66, 68) eine kreisförmige Form aufweisen, die angepasst ist, um in das erste und das zweite schalenförmige Teil (60, 62) eingesetzt zu werden, und radial hervorstehende Zungen (660, 680), die angepasst sind, um in entsprechende Kerben (602, 622) der Umfangsränder (600, 620) des ersten und des zweiten schalenförmigen Teils (60, 62) eingesetzt zu werden.

2. Befestigungssystem nach Anspruch 1, wobei das erste und das zweite schalenförmige Teil (60, 62) Ausbauchformen (604, 624) zum Zentrieren der Endwindungen (640, 642) um eine mittlere Achse (X6) des Befestigungssystems (6) umfassen.

3. Befestigungssystem nach einem der vorherigen Ansprüche, wobei die Platten (66, 68) an den schalenförmigen Teilen (60, 62) durch Nietschrauben (70, 72) befestigt sind, die jeweils das erste und das zweite schalenförmigen Teil (60, 62) an der Platte (4) und an dem Luftgebläse (2) befestigen.

4. Befestigungssystem nach Anspruch 3, wobei jede Schraube (70, 72) einen länglichen Körper (700, 702) aufweist, der durch konzentrische Löcher (662, 682, 608, 628, 40, 20a) eingeführt wird, die jeweils in einer Platte (66, 68), einem schalenförmigen Teil (60, 62) und der Platte (4) oder dem Rahmen (20) des Luftgebläses (2) bereitgestellt sind.

5. Befestigungssystem nach Anspruch 4, wobei jede Schraube (70, 72) einen Kopf (702, 722), einen verformbaren Abschnitt (704, 724), der den länglichen Körper (700, 720) umgibt, und einen radialen Bund (706, 724) umfasst, wobei die schalenförmigen Teile (60, 62) und die Platte (66, 68) zwischen dem Bund (706, 726) und dem verformbaren Abschnitt (704, 724) durch Vernieten aneinander befestigt sind.

6. Befestigungssystem nach einem der Ansprüche 4 und 5, wobei der längliche Körper (700, 720) einen Gewindeabschnitt (700A, 720A) umfasst, der von der gegenüberliegenden Seite des schalenförmigen Teils (60, 62) in Bezug auf die Schraubenfeder (64) hervorsteht.

7. Befestigungssystem nach Anspruch 6, wobei der Rahmen (20) des Luftgebläses (2) angepasst ist, um durch Schrauben einer Mutter (9) auf einen nach oben hervorstehenden Gewindeabschnitt (720A) an dem zweiten schalenförmigen Teil (62) befestigt zu werden.

8. Luftbehandlungseinheit, umfassend ein durch Paneele (4) gebildetes Gehäuse und mindestens ein Luftgebläse (2), wobei das Luftgebläse (2) durch Befestigungssysteme (6) nach einem der vorherigen Ansprüche an einem Paneel (4) des Gehäuses befestigt ist.

## Revendications

1. Système de fixation (6) permettant de fixer un ventilateur (2), comprenant une première partie (60) devant être fixée à un panneau (4) et une seconde partie (62) devant être fixée à un cadre (20) d'un ventilateur (2), et un élément élastique de découplage (64), formé par un ressort hélicoïdal, reliant les première et seconde parties (60, 62),
- les première et seconde parties (60, 62) étant cupuliformes et présentant des bords périphériques (600, 620) s'étendant en direction l'un de l'autre ;
- l'élément élastique de découplage (64) comprenant deux spires terminales (640, 642) qui sont respectivement insérées dans les première et seconde parties cupuliformes (60, 62), **caractérisé en ce que** :
- le système de fixation (6) comprend des plaques (66, 68) insérées entre les spires terminales (640, 642) et les spires centrales (644) du ressort hélicoïdal (64) et fixées aux première et seconde parties cupuliformes (60, 62) ;
- les plaques (66, 68) présentent une forme circulaire adaptée à s'insérer dans les première et seconde parties cupuliformes (60, 62), et des languettes faisant radialement saillie (660, 680) adaptées à s'insérer dans des encoches correspondantes (602, 622) des bords périphériques (600, 620) des première et seconde parties cupuliformes (60, 62).

2. Système de fixation selon la revendication 1, dans lequel les première et seconde parties cupuliformes (60, 62) comprennent des formes bombées (604, 624) permettant de centrer les spires terminales (640, 642) autour d'un axe central (X6) du système de fixation (6).

3. Système de fixation selon une quelconque revendication précédente, dans lequel les plaques (66, 68) sont fixées aux parties cupuliformes (60, 62) par des vis rivetées (70, 72) qui fixent respectivement les première et seconde parties cupuliformes (60, 62) au panneau (4) et à le ventilateur (2).

4. Système de fixation selon la revendication 3, dans lequel chaque vis (70, 72) a un corps allongé (700, 702) qui est inséré à travers des trous concentriques (662, 682, 608, 628, 40, 20a) respectivement disposés dans une plaque (66, 68), une partie cupuliforme (60, 62) et le panneau (4) ou le cadre (20) du ventilateur (2).

5. Système de fixation selon la revendication 4, dans lequel chaque vis (70, 72) comprend une tête (702, 722), une partie déformable (704, 724) qui entoure le corps allongé (700, 720) et un collier radial (706, 724), la partie cupuliforme (60, 62) et la plaque (66, 68) étant fixées ensemble entre le collier (706, 726) et la partie déformable (704, 724) par rivetage.

6. Système de fixation selon l'une quelconque des revendications 4 et 5, dans lequel le corps allongé (700, 720) comprend une partie filetée (700A, 720A) qui fait saillie à partir du côté opposé de la partie cupuliforme (60, 62) par rapport au ressort hélicoïdal (64).

7. Système de fixation selon la revendication 6, dans lequel le cadre (20) du ventilateur (2) est adapté à être fixé à la seconde partie cupuliforme (62) en vissant un écrou (9) sur une partie filetée faisant saillie vers le haut (720A).

8. Unité de traitement d'air comprenant une enceinte formée par des panneaux (4) et au moins un ventilateur (2), dans laquelle le ventilateur (2) est fixée à un panneau (4) de l'enceinte par des systèmes de fixation (6) selon l'une des revendications précédentes.
